# EUROPEAN PATENT APPLICATION

(11) **EP 1 804 077 A1**
(43) Date of publication of application: **04.07.2007**
(21) Application number: 06256480.2
(22) Date of filing: 20.12.2006
(51) Int. Cl.: G01S 13/95, G01S 7/282, G01S 13/28

(54) **Frequency based hybrid pulse for detection of meteorological phenoma in radar systems**

(30) Priority: 23.12.2005 US 753613 P
(71) Applicant: Vaisaila Inc., Westford, MA 01886 (US)
(72) Inventor: O'Hara, Fritz, Pepperell, MA 01463 (US); Siggia, Alan D., Acton, MA 01720 (US)
(74) Representative: McKechnie, Neil Henry

(57) **Abstract**

A system and method for detecting meteorological phenomena by transmitting a sequence of pulses, each pulse having a long range section and a short range section. Echoes based on the sequence of pulses are received. A filter is applied to the echoes to create an ambiguity signal that allows simultaneous detection of targets for a range from range zero up to and including a maximum unambiguous range.

## Description

### CROSS-REFERENCE TO RELATED APPLICATION

This application claims the benefit of U.S. Provisional Patent Application serial number 60/753,613 filed on December 23, 2005, which is incorporated herein by reference.

### BACKGROUND

In weather radar, it is desirable to monitor both near and far activity. However, as the transmitted bursts are either suited for long range or short range targets, a series periodically interspersed long range and short range pulses has been used. Much effort has been put into optimizing the effectiveness of these techniques but efforts at simultaneously collecting data on long and short range targets has been overlooked.

For example, a technology referred to as "pulse compression" is practical for use in meteorological systems such as weather radar and atmospheric sounders as shown in commonly owned U.S. Patent Application No. 11/510,060 filed on August 25, 2006, which is incorporated herein by reference. One side effect of pulse compression is that targets at close range to the measuring system are not detected due to the long receiver recovery time associated with the long pulse transmitted by such systems.

It has also been documented that using techniques such as time division multiplexing of short pulses with the long pulses can solve the problem of short range target detection. However, major drawbacks to the time division technique include that time must be committed to making the short range measurements and this time must be taken away from making the long range measurements. This degrades the quality of the long range measurements, and/or increases the time between instances when the long range measurements are available.

In view of the above, there is a need for a method for processing weather radar signals that quickly and accurately overcomes the problems of detecting short range and long range targets while using techniques such as pulse compression.

### SUMMARY

The subject technology is directed to the detection of short range targets (meaning generally targets within the first few kilometers of range) while simultaneously detecting long range targets (any target beyond the short range) in a meteorological pulse compression system.

In one embodiment, the subject technology is based on an algorithm and practical application thereof using frequency multiplexing of hybrid pulses, rather than time multiplexing of pulses. With frequency multiplexing of hybrid pulses, the significant drawbacks of time multiplexing are mitigated. The subject technology is well suited to use with pulse compression and like technology for meteorological systems such as radar and sounders. In one aspect, pulse compression for meteorological systems is augmented to include short pulses of other frequencies transmitted in the same burst or a "hybrid pulse" as the pulses used for pulse compression. Furthermore, the short pulses can be used for detection of short range targets without significant effect on the detection of long range targets via the long pulse portion of the hybrid pulse.

In one embodiment, the frequency of the short pulses is very close to the frequency of the long pulses used for pulse compression. In one embodiment, all pulses used fit into a relatively narrow frequency slot. As a result, there is no difficulty because of frequency licensing restrictions that are highly regulated as is known at the time of filing and may be even more highly restricted and regulated in the future.

The subject technology is also directed to a method using hybrid pulses that are highly concentrated in frequency, thus not only making the benefits possible, but making the application practical as well.

In one embodiment, the subject technology is a method for acquiring data related to weather phenomena in a radar system having a receiver. The method includes the steps of transmitting a hybrid pulse consisting of a long duration pulse section paired with a short duration pulse section and employing filtering in the receiver such that short range targets and long range targets are simultaneously detected from an echo of the hybrid pulse. In a further aspect, the receiver filter is two separate filters operating coincidentally in time, wherein one filter is matched to the short duration pulse section of the hybrid pulse to yield data for the short range returns and the other filter is a mismatched filter used for the pulse compression aspect of the hybrid pulse to yield the data beyond the short range.

In another embodiment, the subject technology is a method of detecting meteorological phenomena including the steps of transmitting a sequence of pulses, each pulse having a long range section and a short range section, receiving echoes based on the sequence of pulses and applying a filter to the echoes to create an ambiguity signal that allows detection of targets for a range from range zero up to and including a maximum unambiguous range. In one embodiment, the long range section contains a first range of frequencies of about 3 megahertz. In another embodiment, the long range section is 40 microseconds and the short range section is 1 microsecond.

In still another embodiment, the subject technology is a radar system for detecting short range and long range targets including a pulse generator for transmitting a hybrid pulse. A receiver monitors, filters and processes an echo signal based on the hybrid pulse to simultaneously generate short range and long range target data.

It should be appreciated that the present invention can be implemented and utilized in numerous ways, including without limitation as a process, an apparatus, a system, a device, a method for applications now known and later developed or a computer readable medium. These and other unique features of the system disclosed herein will become more readily apparent from the following description and the accompanying drawings.

### BRIEF DESCRIPTION OF THE DRAWINGS

So that those having ordinary skill in the art to which the disclosed system appertains will more readily understand how to make and use the same, reference may be had to the following drawings.

Figure 1 illustrates a waveform demonstrating a hybrid pulse in accordance with the subject technology.

Figure 2 illustrates an ambiguity diagram showing range time sidelobes of a non-hybrid pulse.

Figure 3 illustrates an ambiguity diagram showing range time sidelobes of a hybrid long/short pulse in accordance with the subject technology.

### DETAILED DESCRIPTION OF PREFERRED EMBODIMENTS

The present invention overcomes many of the prior art problems associated with detection of both short range and long range targets of meteorological systems, which preferably employs pulse compression technology. The advantages, and other features of the systems and methods disclosed herein, will become more readily apparent to those having ordinary skill in the art from the following detailed description of certain preferred embodiments taken in conjunction with the drawings which set forth representative embodiments of the present invention.

In brief overview, the subjection technology is directed to designing a digitized waveform that can be transmitted and an appropriate receiver digital filter. A preferred system and method incorporates long duration pulses with pulse compression technology for detection of long range echoes providing enhanced sensitivity, together with short duration pulses for detection of short range echoes. Such frequency-multiplexed pulses are "hybrid pulses".

Unless otherwise specified, the detailed description herein can be understood as providing exemplary features of varying detail of certain embodiments, and therefore, unless otherwise specified, features, components, modules, elements, and/or aspects of the subject technology can be otherwise rearranged without materially departing from the disclosed systems or methods. In a preferred embodiment, the subject technology is used with a Doppler weather radar system as disclosed in U.S. Patent Application No. 11/510,060.

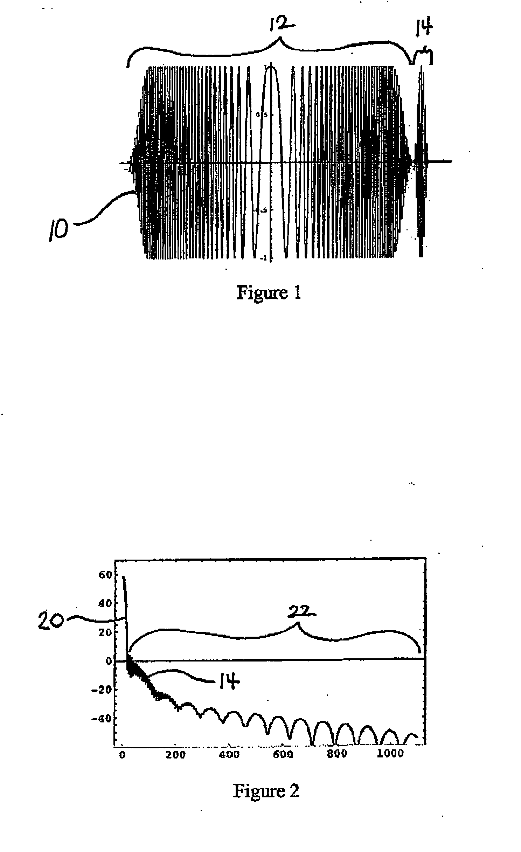

Referring now to Figure 1, a waveform or hybrid pulse is illustrated and referred to generally by the reference numeral 10. In a single burst, the radar or sounder transmitter emits the hybrid pulse 10. Normally, the hybrid pulse 10 is designed for a particular application and digitally generated. For example, the hybrid pulse 10 has a 40 microsecond frequency modulated long pulse section 12, which is coupled with a 1 microsecond short pulse section 14 immediately thereafter. The long pulse section 12 is used for pulse compression and contains a range of frequencies, covering a few megahertz of bandwidth. The short pulse section 14 contains a narrow band of frequencies, which are offset from the frequency range of the long pulse section 12 by a small amount.

In an embodiment, the long pulse section 12 would be 40 microseconds in duration and contain a frequency modulated bandwidth of 3 megahertz. The short pulse section 14 would be 1 microsecond in duration at a single fixed frequency, but the pulsing aspect of the short pulse section 14 would give it a bandwidth of 1 megahertz. In this case, the short pulse center frequency is about 1.5 megahertz above the long pulse center frequency. As a result, the short pulse center frequency is at the edge frequency of the long pulse section 12.

A property of pulse compression techniques is the ability of the technique to minimize range time side lobes. Range time side lobes are undesirable false echoes appearing at locations on either side in range of an actual echo. With the augmentation of using the hybrid pulse 10, the hybrid pulse 10 does not substantially increase the range time side lobes that would be experienced without the addition of the hybrid pulse. Thus, the range time side lobes are maintained at a reasonable level, while garnering the benefits of the hybrid pulse 10.

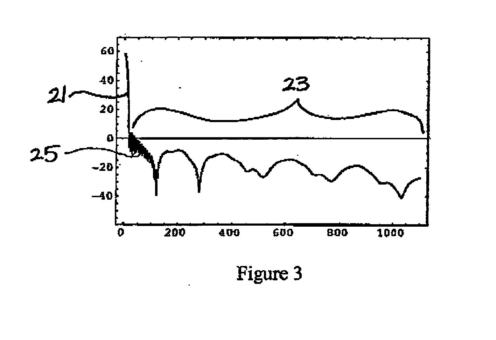

Referring now to Figures 2 and 3, ambiguity diagrams depict range time sidelobes with non-hybrid and hybrid pulses, respectively, for comparison. The horizontal or x-axis is the range given in microseconds and the vertical or y-axis is dB. At range zero, the primary echo 20, 21, respectively, is illustrated with subsequent humps in the range time sidelobe sections 22, 23, respectively. It is desired that the humps of the range time sidelobe sections 22, 23 be as small as possible with respect to the respective primary echoes 20, 21.

Referring in particular to Figure 2, the ambiguity diagram of a pulse compression waveform and receiver pair for a non-hybrid only long pulse is shown. As can be seen, the peak sidelobe 24 is about 60 dB below the primary echo 20. As a result, the pulse compression waveform and receiver pair would generate a good figure of merit for the pulse compression system. Following the first peak sidelobe 24, the subsequent sidelobes trail off in range.

Referring in particular to Figure 3, the ambiguity diagram of the hybrid pulse 10 and a receiver pair is shown. As can be seen, the peak sidelobe 25 is basically the same as the non-hybrid case in Figure 2. Subsequent sidelobes are also less than the peak sidelobe 25, trailing off in range, but a little less rapidly trailing as compared to the non-hybrid case of Figure 2.

Preferably, the hybrid pulse 10 has an appropriate digital receiver filter (not shown explicitly). The receiver filter is constructed purposefully to augment the resulting waveform. In one embodiment, the receiver filter is actually two separate filters operating coincidentally in time. Preferably, the first filter is simply a conjugate of the short pulse transmitted waveform. The first or matched filter is a filter that is matched to the short pulse section 14 of the hybrid pulse 10 to yield the data for the short range returns. The matched filter results in yielding the data for the short range returns. The second filter is a filter used for the pulse compression waveform and yields all data beyond the short range. Suitable second filters are described in detail in U.S. Patent Application No. 11/510,060. For example, the second filter may be a windowed filter.

As a result, the hybrid pulse 10 and receiver filter have the advantage of being able to be used to make short range detections not possible with the non-hybrid case, whereas a cost may be a small increase in the integrated side lobe levels, but no increase in the peak side lobe levels, which is normally acceptable.

While the invention has been described with respect to preferred embodiments, those skilled in the art will readily appreciate that various changes and/or modifications can be made to the invention without departing from the spirit or scope of the invention as defined by the appended claims.

## Claims

1. A method for acquiring data related to weather phenomena in a radar system having a receiver, the method comprising the steps of:
a) transmitting a hybrid pulse consisting of a long duration pulse section paired with a short duration pulse section; and
b) employing a receiver filter in the receiver such that short range targets and long range targets are simultaneously detected from an echo of the hybrid pulse.

2. A method as recited in claim 1, wherein the hybrid pulse is digitally generated.

3. A method as recited in claim 1, wherein the receiver filter is digital.

4. A method as recited in claim 1, wherein the receiver filter is a first and second filter operating coincidentally in time.

5. A method as recited in claim 4, wherein the first filter is matched to the short duration pulse section of the hybrid pulse.

6. A method as recited in claim 4, wherein the second filter is a windowed filter.

7. A method of detecting meteorological phenomena comprising the steps of:
a) transmitting a sequence of pulses, each pulse having a long range section and a short range section;
b) receiving echoes based on the sequence of pulses; and
c) applying a filter to the echoes to create an ambiguity signal that allows detection of targets for a range from range zero up to and including a maximum unambiguous range.

8. A method as recited in claim 7, wherein the sequence of pulses is designed to maintain low peak range time side lobe values of the ambiguity signal.

9. A method as recited in clam 7, wherein the long range section contains a first range of frequencies.

10. A method as recited in clam 7, the short range section contains a second range of frequencies relatively smaller than the first range.

11. A radar system for detecting short range and long range targets comprising:
a pulse generator for transmitting a hybrid pulse having a short range target portion and a long range target portion, wherein the short range target portion and the long range target portion are separated in frequency; and
a receiver for monitoring, filtering and processing an echo signal based on the hybrid pulse to simultaneously generate short range and long range target data.

12. The radar system of Claim 11, wherein the hybrid pulse includes a short pulse of a first frequency and a long pulse of a second frequency.
